# EUROPÄISCHE PATENTANMELDUNG

(11) **EP 3 181 752 A1**
(43) Veröffentlichungstag der Anmeldung: **21.06.2017**
(21) Anmeldenummer: 16001999.8
(22) Anmeldetag: 14.09.2016
(51) Int. Cl.: D06F 67/04

(54) **VORRICHTUNG ZUM ZUFÜHREN VON WÄSCHESTÜCKEN ZU EINER MANGEL**

(30) Priorität: 16.12.2015 DE 102015016230
(71) Anmelder: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(57) **Zusammenfassung**

Wäschestücke (12) werden in gewerblichen Wäschereien in einem ausgebreiteten Zustand einer Mangel oder dergleichen zugeführt. Das erfolgt maschinell durch Vorrichtungen zum Zuführen von Wäschestücken (12). Jedes an Spreizklammern (13) hängende Wäschestück (12) wird mit einer ausgebreiteten Vorderkante voran auf einen Zuführförderer abgelegt, der das Wäschestück (12) in ausgebreitetem Zustand der Mangel zuführt. Dabei kann das Ausbreiten dazu führen, dass das Wäschestück (12) entweder nicht vollständig ausgebreitet, oder dass das Wäschestück (12) derart gespannt wird, dass es irreversible Schäden erleidet. Die Erfindung schafft eine Vorrichtung, womit Wäschestücke (12) automatisch einer Mangel oder dergleichen zuführbar sind. Das wird dadurch erreicht, dass die Spreizklammern (13) durch mindestens einen Linearmotor verfahrbar sind, wobei Schlitten (14, 29, 42) jeweils einem Primärteil des Linearmotors zugeordnet sind oder die Schlitten (14, 29, 42) die Primärteile des Linearmotors bilden und ein Schiene (15) dem Sekundärteil des Linearmotors zugeordnet ist oder die Schiene (15) das Sekundärteil bildet.

## Beschreibung

Die Erfindung betrifft eine Vorrichtung zum Zuführen von Wäschestücken zu einer Mangel oder dergleichen gemäß dem Oberbegriff des Anspruchs 1.

Wäschestücke werden in gewerblichen Wäschereien nach dem Waschen und Trocknen als sogenannte Trockenwäsche in einer Mangel gemangelt und dabei von Ihrer Restfeuchte befreit oder sogleich in einer Falteinrichtung gefaltet. Die Wäschestücke müssen im ausgebreiteten Zustand der Mangel, Falteinrichtung oder einer sonstigen Wäschebehandlungseinrichtung zugeführt werden. Das erfolgt maschinell durch Vorrichtungen zum Zuführen von Wäschestücken.

Vorrichtungen der hier angesprochenen Art dienen dem maschinellen Zuführen von Wäschestücken zu einer Mangel oder einer anderen Wäschebehandlungseinrichtung. Die Wäschestücke werden mit gegenüberliegenden Ecken einer Kante von Hand in Beladeklammern eingegeben, die die Wäschestücke an Spreizklammern zum Ausbreiten der Wäschestücke übergeben. Jedes an den Spreizklammern hängende ausgebreitete Wäschestück wird dann mit der ausgebreiteten Vorderkante voran auf einen Zuführförderer, der gegebenenfalls eine Ablegeleiste aufweisen kann, abgelegt. Der Zuführförderer führt das Wäschestück in ausgebreitetem Zustand der Mangel oder einer sonstigen Wäschebehandlungseinrichtung.

Nachteilig beim bekannten Zuführen von Wäschestücken zu einer Wäschebehandlungseinrichtung, insbesondere einer Mangel, ist das Ausbreiten der Wäschestücke mittels der Spreizeinrichtung. Die benachbarten Ecken der Vorderkante des Wäschestücks werden üblicherweise nahe beieinander von den zusammengefahrenen Spreizklammern übernommen oder an diese übergeben. Sobald die Ecken der Vorderkanten des Wäschestücks an die Spreizklammern übergeben sind, werden diese entlang einer Schiene quer zur Zuführrichtung des Wäschestücks auseinander bewegt. Damit die Spreizklammern gerade soweit auseinandergefahren werden, dass das Wäschestück komplett ausgebreitet ist, muss zunächst, beispielsweise durch einen Durchhangsensor, die Breite des Wäschestücks bestimmt werden. Bisher sind die Spreizklammern an Schlitten befestigt, die wiederrum mittels Riemen entlang der Schiene verfahren werden. Durch diesen Riemenantrieb lässt sich der Abstand zwischen den Spreizklammern nur sehr ungenau und unzuverlässig erreichen. Das führt dazu, dass das Wäschestück entweder nicht vollständig ausgebreitet an den Zuführförderer übergeben wird oder dass das Wäschestück derart gespannt wird, dass es irreversible Schäden erleidet.

Der Erfindung liegt daher die Aufgabe zugrunde, eine Vorrichtung zu schaffen, womit auf einfache und zuverlässige Weise Wäschestücke automatisch einer Mangel oder dergleichen zuführbar sind und womit gleichzeitig eine hohe Zuführleistung gewährleistet werden kann.

Eine Vorrichtung zur Lösung dieser Aufgabe weist die Merkmale des Anspruchs 1 auf. Danach ist es vorgesehen, dass die Spreizklammern durch mindestens einen Linearmotor verfahrbar sind, wobei die Schlitten jeweils einem Primärteil des Linearmotors zugeordnet sind oder die Schlitten die Primärteile des Linearmotors bilden und die Schiene dem Sekundärteil des Linearmotors zugeordnet ist oder die Schiene das Sekundärteil bildet. Durch das Verfahren des Schlittens auf der Schiene mittels eines Linearmotors lässt sich jede Position der Schiene durch die Schlitten punktgenau, schnell und zuverlässig anfahren. Anders als bei konventionellen Riemenantrieben ist der Reibungswiederstand zwischen dem Schlitten und der Schiene äußerst gering, wodurch die Anfahrgenauigkeit sehr genau und zuverlässig ist.

Bevorzugt kann es die vorliegende Erfindung weiter vorsehen, dass die Schiene ein Führungssystem aufweist, zum Führen der Schlitten. Dieses Führungssystem erstreckt sich über die gesamte Länge der Schiene und ist fest an dieser Installiert. Die Länge des Führungssystems entspricht gerade der maximalen Laufweite der Schlitten auf der Schiene und wird dadurch durch die Dimensionierung der Vorrichtung bestimmt. Es kann jedoch auch vorgesehen sein, dass eine Vorrichtung zwei getrennte Führungssysteme zur Aufnahme verschiedenartiger Wäschestücke aufweist.

Insbesondere kann es vorgesehen sein, dass dem Führungssystem eine Vielzahl von Permanentmagneten zugeordnet ist, deren magnetische Pole in einer alternierenden Folge angeordnet sind. Somit bilden die Permanentmagnete des Führungssystems zusammen mit der Schiene das Sekundärteil des Linearmotors. Je nach Anforderung an die Vorrichtung zum Zuführen von Wäschestücken können die Permanentmagnete verschiedene Magnetfeldstärken aufweisen. Durch den Abstand der einzelnen Permanentmagnete untereinander kann die Anfahrgenauigkeit der Schlitten relativ auf der Schiene festgelegt werden.

Des Weiteren kann es vorgesehen sein, dass die Schlitten jeweils mindestens einen Elektromagneten, vorzugsweise mindestens eine Läuferwicklung, aufweisen, die den Permanentmagneten direkt gegenüberliegend angeordnet sind. In der Regel ist jedem Schlitten ein Paar Läuferwicklungen zugeordnet. Durch einen phasenverschobenen Wechsel der Magnetfeldpolarität der beiden Läuferwicklungen bzw. der Elektromagneten werden die Schlitten über die Schiene bewegt. Durch die Frequenz der Polwechsel der Läuferwicklung lässt sich die Geschwindigkeit der Schlitten auf der Schiene steuern. So kann es beispielsweise zum Verfahren der Schlitten in eine Aufnahmestellung vorgesehen sein, dass die Anfahrgeschwindigkeit gering ist, wobei hingegen die Laufgeschwindigkeit der Schlitten während des Ausbreitens groß ist.

Eine weitere vorteilhafte Ausgestaltung der vorliegenden Erfindung kann es vorsehen, dass die Klammern, insbesondere Spreizklammern, über eine Anbindung an den Schlitten befestigt sind. Bei dieser Anbindung kann es sich beispielsweise um eine Platte aus Metall oder Kunststoff handeln. Die Spreizklammern können ein aus zwei Elementen bestehendes Klammermaul aufweisen, das sich automatisch öffnen und schließen lässt.

Bevorzugt kann es die vorliegende Erfindung weiter vorsehen, dass der mindestens eine Elektromagnet in die Anbindung integriert ist, vorzugsweise das der mindestens eine Elektromagnet auf einer der Anbindung gegenüberliegenden Seite der Schiene am Schlitten befestigt ist. Dabei kann es vorgesehen sein, dass der Schlitten die Schiene vollständig, ringartig umschließt. Zwischen dem Elektromagneten und den Permanentmagneten besteht stets ein schmaler Luftspalt, um den Gleitwiderstand bzw. die Reibung zwischen dem Primärteil und dem Sekundärteil so gering wie möglich zu halten. Durch diese Minimierung des mechanischen Wiederstandes lässt sich das Primärteil besonders schnell und zuverlässig bei einem gleichzeitig sehr geringem Energieaufwand punktgenau über die Schiene steuern.

Des Weiteren kann es bevorzugt vorgesehen sein, dass die Schlitten Kugellager, Rollen oder dergleichen aufweisen, um auf dem Führungssystem der Schiene bewegbar zu sein. Dabei bewegen sich die Rollen bzw. die Kugeln des Kugellagers über das Führungssystem an der Schiene.

Ein weiteres besonders bevorzugtes Ausführungsbeispiel der vorliegenden Erfindung kann es vorsehen, dass die mindestens zwei Schlitten auf der Schiene unabhängig voneinander verfahrbar sind. Die mindestens zwei Schlitten sind auf der Schiene derart bewegbar, dass das Wäschestück möglichst effizient und schnell ausgebreitet wird. Insbesondere für den Fall, dass der Schiene mehr als zwei Schlitten zugeordnet sind, sind diese mehreren Schlitten derartig zu koordinieren, dass mehrere Wäschestücke gleichzeitig oder schnell nacheinander an den Zuführförderer übergeben werden können. Es kann insbesondere vorgesehen sein, dass an der Schiene zwei Personen stehen, die im Wechsel Wäschestücke an die Spreizklammern übergeben. Bei schmalen Wäschestücken kann dies auch gleichzeitig geschehen.

Weiter kann es bevorzugt vorgesehen sein, dass die mindestens zwei Schlitten über eine Steuereinheit zu jeder Position auf der Schiene verfahrbar sind. Die Steuereinheit misst die Position der Schlitten, wo die Schlitten hinfahren können bzw. müssen und fährt diese sodann mit einer hohen Punktgenauigkeit und mit einem minimalen zeitlichen Aufwand zu der entsprechenden Position.

Des Weiteren kann es vorgesehen sein, dass die Schlitten bzw. die Spreizklammern durch die Steuereinheit derart relativ zueinander verfahrbar sind, dass ein Abstand der Schlitten bzw. der Spreizklammern der Breite eines Wäschestücks entspricht. Dabei kann es vorgesehen sein, dass über eine Sensoreinheit oder eine manuelle oder automatische Eingabe der Steuereinheit die Breite des Wäschestücks mitgeteilt wird, insbesondere vor der Übergabe des Wäschestücks an die Spreizklammern. Entsprechend dieser Breite werden sodann die Spreizklammern mit den Schlitten schnell und punktgenau auseinandergefahren, ohne dass das Wäschestück dabei Schaden nimmt oder nicht vollständig ausgebreitet wird. Durch diesen Linearantrieb lassen sich die Wäschestücke somit effizient und schnell sowie zuverlässig ausbreiten und an den Zuführförderer übergeben.

Bevorzugte Ausführungsbeispiele der Erfindung werden nachfolgend anhand der Zeichnung näher erläutert. In dieser zeigen:
- Fig. 1: eine schematische, perspektivische Darstellung der Vorrichtung zum Zuführen von Wäschestücken zu einer Mangel oder dergleichen,
- Fig. 2: eine schematische Darstellung einer Schiene mit zwei Schlitten,
- Fig. 3: ein Querschnitt der in Fig. 2 dargestellten Schiene und eines Schlittens,
- Fig. 4: ein Querschnitt eines weiteren Ausführungsbeispiels einer Schiene und eines Schlittens, und
- Fig. 5: ein Querschnitt durch ein weiteres Ausführungsbeispiel eines Schlittens und einer Schiene.

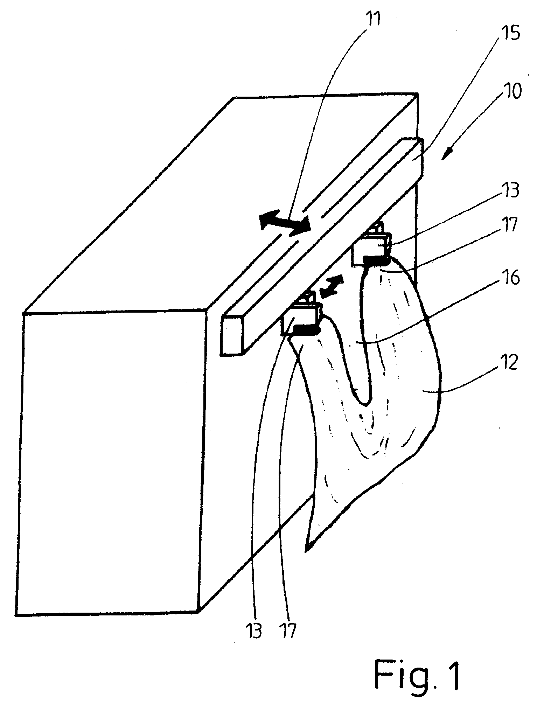

Die in der Fig. 1 stark vereinfachte, schematisierte Darstellung einer Vorrichtung dient zum Zuführen von ausgestreckten Wäschestücken 12 zu einer in der Figur nicht dargestellten Mangel oder einer anderen Wäschebehandlungsmaschine. Die Vorrichtung verfügt im Wesentlichen über eine Spreizeinrichtung 10 und einem dieser zugeordneten nicht dargestellten Zuführförderer. Vom Zuführförderer ist jeweils ein einzelnes, ausgebreitetes Wäschestück 12 der Mangel oder dergleichen zuführbar. Es ist auch denkbar, zwischen dem Zuführförderer und der Mangel einen in den Figuren nicht gezeigten Streckförderer vorzusehen. Jeweils ein ausgebreitetes Wäschestück 12 wird dann vom Zuführförderer 11 an den Streckförderer Übergeben und von diesem in eine einen Pfeil 12 angedeutete Zuführrichtung an die Mangel übergeben. Die Spreizeinrichtung 10 und der Zuführförderer sind an einem gemeinsamen Maschinengestell gelagert, dass in der Fig. 1 nur andeutungsweise dargestellt ist.

Die Spreizeinrichtung 10 befindet sich in Bezug auf die Zuführrichtung 11 vor dem Zuführförderer. Die hier gezeigte Spreizeinrichtung 10 verfügt über ein Klammerpaar aus zwei gleich ausgebildeten Klammern 13. Die Klammern 13 sind quer zur Zuführrichtung 11 vor dem Zuführförderer zusammen- und auseinanderfahrbar. Jede Klammer 13 ist an einem Schlitten 14 befestigt, der beispielsweise mit Laufrollen an einer quer zur Zuführrichtung 11 horizontal verlaufend vor dem Zuführförderer befestigten Schiene 15 verfahrbar ist. Bei zusammengefahrenen Klammern 13 (Fig. 1) werden manuell einen oberen Rand 16 des Wäschestücks 12 begrenzende, gegenüberliegende Ecken 17 in jeweils eine Klammer 13 eingeschoben. Durch auseinanderfahren der Klammern 13 wird das Wäschestück 12 ausgebreitet bzw. gespreizt und dabei der obere Rand 16 des Wäschestücks 12 gestreckt. Das Wäschestück 12 wird mit gestrecktem oberen Rand 16 von den Klammern 13 der Spreizeinrichtung 10 in Zuführrichtung 11 zum Zuführförderer bewegt, und zwar entlang der sich in Zuführrichtung 11 erstreckenden, horizontalen Bahnen. Anschließend wird das Wäschestück 12 von den Klammern 13 an den Zuführförderer übergeben.

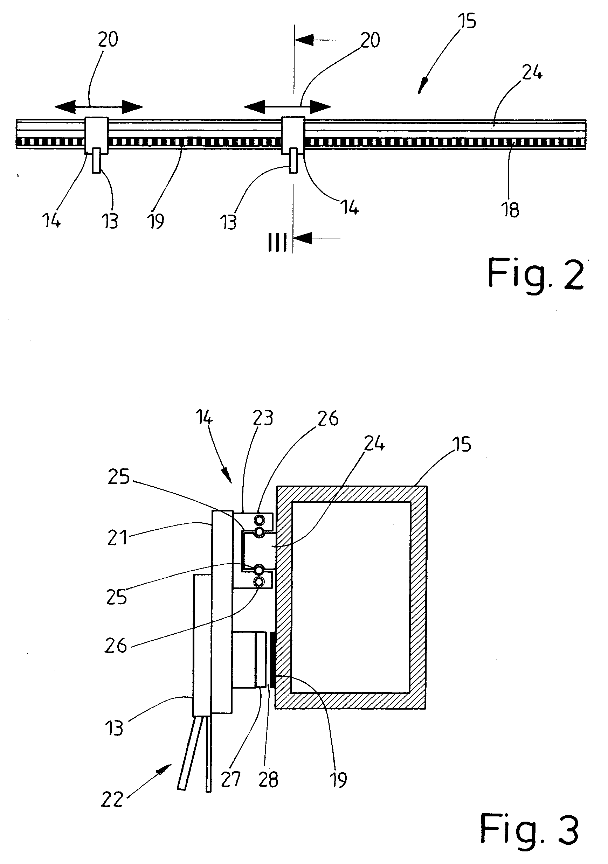

Bei der in Fig. 2 dargestellten Schiene 15 handelt es sich nun ein Sekundärteil eines Linearmotors. Bei diesem Ausführungsbeispiel ist einem unteren Teil 18 der Schiene 15 quer zur Zuführrichtung 11 eine alternierende Folge von Permanentmagneten 19 angeordnet. Die Permanentmagnete 19 haben lediglich eine Breite von einigen Zentimetern bzw. Millimetern und sind derart ausgerichtet, dass abwechselnd der magnetische Südpol bzw. Nordpol aus der Zeichnungsebene herausragt.

Die beiden in der Fig. 2 dargestellten Schlitten 14 bilden Primärteile des Linearantriebs bzw. des Linearmotors. Diese Schlitten 14 sind unabhängig voneinander entlang der Schiene 15 in Pfeilrichtung 20 hin- und herfahrbar. Den Schlitten 14 ist jeweils eine Klammer 13 bzw. Spreizklammer zur Aufnahme einer Ecke 17 eines Wäschestücks 12 zugeordnet. Anders als in der Fig. 1 sind die Klammern 13 in der Fig. 2 nach unten ausgerichtet.

Für die Aufnahme eines Wäschestücks 12 werden die Schlitten 14 der Klammern 13 zusammengefahren, so dass die Ecken 17 des Wäschestücks 12 in die Klammern 13 geschoben werden können. Daraufhin werden die Schlitten 14 des Linearantriebs genau soweit auseinandergefahren, dass der obere Rand 16 des Wäschestücks 12 gespannt ist. Durch die exakte Steuerung des Linearmotors, kann dieser Abstand bzw. die Breite des Wäschestücks 12 exakt angefahren werden und somit eine effiziente und Wäschestück schonende Zuführung zu einer Mangel realisiert werden.

In der Fig. 3 ist eines von mehreren möglichen Ausführungsbeispielen eines Schlittens 14 dargestellt. Der Schlitten 14 weist im Wesentlichen eine Anbindung 21 auf, an der die Klammer 13 befestigbar ist. Die Klammer 13 weist hier ein leicht geöffnetes Klammermaul 22 auf. Da derartige Klammern 13 bekannt sind, wird für eine detaillierte Beschreibung auf den einschlägigen Stand der Technik verwiesen. Des Weiteren weist der Schlitten 14 ein Führungssystem 23 auf, dass mit der Anbindung 21 fest verbunden ist. Dieses Führungssystem 23 läuft über ein Führungselement 24, welches beweglich mit der Schiene 15 verbunden ist. Bei dem in der Fig. 3 dargestellten Führungselement 24 handelt es sich um einen schienenartigen Steg, der parallel zu der Folge von Permanentmagneten 19 angeordnet ist (Fig. 2).

Das Führungselement 24 weist zwei gegenüberliegende Rinnen 25 auf, die als Führung von Kugeln eines Kugellagers des Führungselementes 24 dienen. Das Führungselement 24 weist des Weiteren für eine möglichst reibungsfreie Bewegung auf dem Führungssystem 23 eine Kugelrückführung 26 auf.

Des Weiteren ist der Anbindung 21 mindestens ein Elektromagnet 27 bzw. eine Läuferwicklung zugeordnet. Der mindestens eine Elektromagnet 27 bzw. die zwei Elektromagnete 27 sind derart relativ zu der Schiene 15 angeordnet, dass sie den Permanentmagneten 19 genau gegenüberliegen. Das Führungssystem 23 ist derart formschlüssig mit dem Führungselement 24 verbunden, dass zwischen den Permanentmagneten 19 und den Elektromagneten 27 ein konstanter, schmaler Luftspalt 28 ausbildet. Das Spiel zwischen dem Führungssystem 23 und dem Führungselement 24 ist derart gering, dass der Luftspalt 28 beim Verfahren der Schlitten 14 entlang der Schiene 15 eine nahezu konstante Breite aufweist.

Durch elektrische Ansteuerung der Elektromagnete 27 lassen sich nun die Schlitten 14 zielgenau und schnell zu jeder beliebigen Position auf der Schiene 15 verfahren. Des Weiteren lassen sich über eine Steuerung die Klammern 13 automatisch öffnen und schließen.

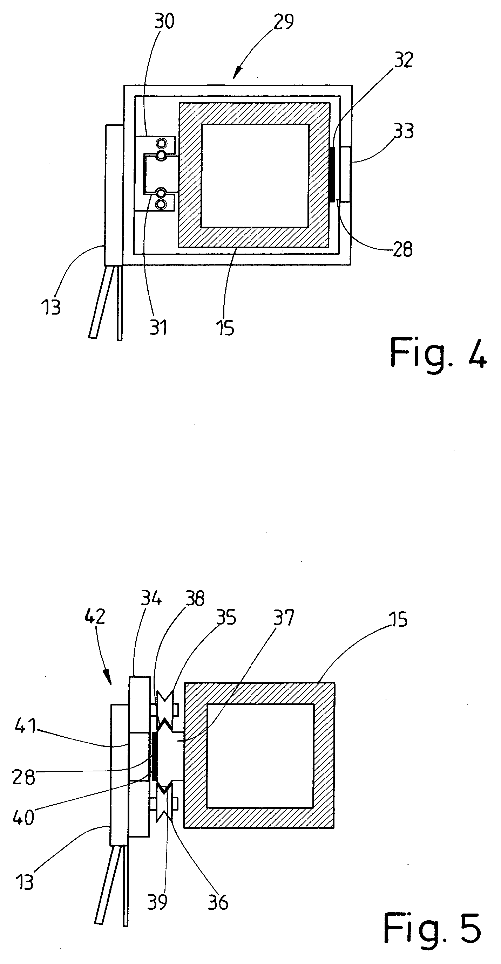

Bei dem in der Fig. 4 dargestellten Ausführungsbeispiel eines Schlittens 29 umfasst dieser ringartig die Schiene 15. Genau wie bei dem zuvor beschriebenen Ausführungsbeispiel eines erfindungsgemäßen Schlittens 14 weist auch der Schlitten 29 ein ein Kugellager aufweisendes Führungssystem 30 auf, welches entlang eines Führungselementes 31 verfahrbar ist. Bei diesem Ausführungsbeispiel eines Schlittens 29 ist die Klammer 13 direkt an den Schlitten 29 befestigt.

Dem Führungselement 31 gegenüberliegend ist an der anderen Seite der Schiene 15 die alternierende Folge von Permanentmagneten 32 angeordnet. Die Elektromagnete 33 des Schlittens 29 sind auch hier wieder direkt gegenüber den Permanentmagneten 39 positioniert, so dass sich beim Entlangfahren des Schlittens 29 auf der Schiene 15 zwischen den Permanentmagneten 32 und dem Elektromagnet 33 ein konstant schmaler Luftspalt 28 ausbildet.

Bei dem in der Fig. 5 dargestellten Ausführungsbeispiel sind einer Anbindung 34 als Führungssystem zwei Rollen 35, 36 zugeordnet. Die Drehachse der Rollen 35, 36 sind quer zur Richtung 20 positioniert und laufen auf einem Führungselement 37, dass jeweils der Form der Rollen 35, 36 entsprechende Führungen 38, 39 aufweist.

Bei diesem Ausführungsbeispiel sind dem Führungselement 37 direkt die Permanentmagnete 40 zugeordnet. Die Anbindung 34 weist mittig einen Elektromagneten 41 auf, der genau derart positioniert ist, dass er den Permanentmagneten 40 gegenüberliegt. Beim Verfahren des Schlittens 42 entlang der Schiene 15 bewegt sich somit die Anbindung 34 derart über das Führungselement 34, dass sich zwischen dem Elektromagneten 41 und dem Permanentmagneten 40 ein schmaler, konstanter Luftspalt 28 ausbildet.

An dieser Stelle soll ausdrücklich darauf hingewiesen werden, dass die vorliegende Erfindung nicht auf die hier dargestellten Ausführungsbeispiele eingeschränkt sein soll.

**Bezugszeichenliste:**

| | | | |
|---|---|---|---|
| 10 | Spreizeinrichtung | 36 | Rolle |
| 11 | Pfeil | 37 | Führungselement |
| 12 | Wäschestück | 38 | Führung |
| 13 | Klammer | 39 | Führung |
| 14 | Schlitten | 40 | Permanentmagnet |
| 15 | Schiene | 41 | Elektromagnet |
| 16 | oberer Rand | 42 | Schlitten |
| 17 | Ecke | | |
| 18 | unterer Teil | | |
| 19 | Permanentmagnet | | |
| 20 | Pfeilrichtung | | |
| 21 | Anbindung | | |
| 22 | Klammermaul | | |
| 23 | Führungsystem | | |
| 24 | Führungselement | | |
| 25 | Rinne | | |
| 26 | Kugelrückführung | | |
| 27 | Elektromagnet | | |
| 28 | Luftspalt | | |
| 29 | Schlitten | | |
| 30 | Führungssystem | | |
| 31 | Führungselement | | |
| 32 | Permanentmagnet | | |
| 33 | Elektromagnet | | |
| 34 | Anbindung | | |
| 35 | Rolle | | |

## Patentansprüche

1. Vorrichtung zum Zuführen von Wäschestücken (12) zu einer Mangel oder dergleichen mit einem, gegebenenfalls eine Ablegeleiste aufweisenden, Zuführförderer, einer in Zuführrichtung (11) des Wäschestücks (12) vor dem Zuführförderer angeordneten Spreizeinrichtung (10) mit mindestens zwei quer zur Zuführrichtung (11) entlang einer Schiene (15) verfahrbaren, jeweils einem Schlitten (14, 29, 42) zugeordneten Klammern (13) zum Halten gegenüberliegender Ecken (17) des Wäschestücks (12), wobei die Schlitten (14, 29, 42) mit den Klammern (13) zum Ausstrecken des an den Klammern (13) hängenden Wäschestücks (12) durch mindestens einen Linearantrieb entlang der Schiene (15) verfahrbar sind, **dadurch gekennzeichnet, dass** die Klammern (13) durch mindestens einen Linearmotor verfahrbar sind, wobei die Schlitten (14, 29, 42) jeweils einem Primärteil des Linearmotors zugeordnet sind oder die Schlitten (14, 29, 42) die Primärteile des Linearmotors bilden und die Schiene (15) dem Sekundärteil des Linearmotors zugeordnet ist oder die Schiene (15) das Sekundärteil bildet.

2. Vorrichtung nach Anspruch 1, **dadurch gekennzeichnet, dass** die Schiene (15) ein Führungssystem (23, 30) aufweist, zum Führen der Schlitten (14, 29, 42).

3. Vorrichtung nach Anspruch 2, **dadurch gekennzeichnet, dass** dem Führungssystem (23, 30) eine Vielzahl von Permanentmagneten (19, 32, 40) zugeordnet ist, deren magnetische Pole in einer alternierenden Folge angeordnet sind.

4. Vorrichtung nach einem der vorhergehenden Ansprüche, **dadurch gekennzeichnet, dass** die Schlitten (14, 29, 42) jeweils mindestens einen Elektromagneten (27, 33, 41), vorzugsweise mindestens eine Läuferwicklung, aufweisen, die den Permanentmagneten (19, 32, 40) direkt gegenüberliegend angeordnet sind.

5. Vorrichtung nach einem der vorhergehenden Ansprüche, **dadurch gekennzeichnet, dass** die Klammer (13), insbesondere Spreizklammern, über eine Anbindung (21, 34) an den Schlitten (14, 29, 42) befestigt sind.

6. Vorrichtung nach einem der vorhergehenden Ansprüche, **dadurch gekennzeichnet, dass** der mindestens eine Elektromagnet (27, 33, 41) in die Anbindung (21, 34) integriert ist, vorzugsweise dass der mindestens eine Elektromagnet (27, 33, 41) auf einer der Anbindung (21, 34) gegenüberliegenden Seite der Schiene (15) am Schlitten (14, 29, 42) befestigt ist.

7. Vorrichtung nach einem der vorhergehenden Ansprüche, **dadurch gekennzeichnet, dass** die Schlitten (14, 29, 42) Kugellager, Rollen (35, 36) oder dergleichen aufweisen, um auf dem Führungssystem (23, 30) der Schiene (15) bewegbar zu sein.

8. Vorrichtung nach einem der vorhergehenden Ansprüche, **dadurch gekennzeichnet, dass** die mindestens zwei Schlitten (14, 29, 42) auf der Schiene (15) unabhängig voneinander verfahrbar sind.

9. Vorrichtung nach einem der vorhergehenden Ansprüche, **dadurch gekennzeichnet, dass** die mindestens zwei Schlitten (14, 29, 42) über eine Steuereinheit zu jeder Position auf der Schiene (15) verfahrbar sind.

10. Vorrichtung nach einem der vorhergehenden Ansprüche, **dadurch gekennzeichnet, dass** die Schlitten (14, 29, 42) bzw. die Klammern (13) durch die Steuereinheit derart relativ zueinander verfahrbar sind, dass ein Abstand der Schlitten (14, 29, 42) bzw. der Klammern (13) der Breite eines Wäschestücks (12) entspricht.
